(19) Europäisches Patentamt

European Patent Office

Office européen des brevets

(11) **EP 1 063 516 A2**

(12) **EUROPEAN PATENT APPLICATION**

(43) Date of publication:
**27.12.2000 Bulletin 2000/52**

(51) Int. Cl.⁷: **G01N 15/06**

(21) Application number: **00108778.2**

(22) Date of filing: **25.04.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **30.04.1999 JP 12535999**
**30.04.1999 JP 12537099**

(71) Applicant: **HORIBA, LTD.**
**Minami-ku Kyoto (JP)**

(72) Inventors:
• **Fukushima, Hirokazu**
  **Kissyoin, Minami-ku, Kyoto (JP)**
• **Asano, Ichiro**
  **Kissyoin, Minami-ku, Kyoto (JP)**

(74) Representative:
**MÜLLER & HOFFMANN Patentanwälte**
**Innere Wiener Strasse 17**
**81667 München (DE)**

(54) **Method for particulate-matter measuring of exhaust gas and an apparatus therefor**

(57)    This invention provides a method for detecting soot signal in the PM measurement in exhaust gas being capable of extracting in good efficiency even a small pulse signal buried in noise, an apparatus for measuring PM contained in exhaust gases being capable of detecting the soot signal in good precision even in case of fluctuation of the base, and a method for detecting the soot signal in the PM measurement in exhaust gas.

This invention comprises sampling the gas G exhausted from the internal combustion engine 1 as a sample gas S, introducing it in a frame ionization detector 5, taking the original signal a outputted from the frame ionization detector 5 through the preamplifier 7 into a signal processing apparatus 8 using a computer, and providing the signal a taken in with a threshold value with a threshold value to extract the pulse-shaped soot signal 13,14, taking said original signal a into a low-pass filter having frequency characteristics which are approximately equal to the frequency characteristics of said preamplifier, and providing the signal 10 filtered through the low-pass filter with a threshold value T to extract said soot signal 13,14.

This invention comprises sampling the gas G exhausted from the internal combustion engine 1 as a sample gas S, introducing it in a frame ionization detector 5, providing the original signal a outputted from the frame ionization detector 5 at that time with a threshold value to extract the pulse-shaped soot signal, which includes:

(1) a first step of preparing an original shift signal $[f(t-t_0)]$ with retardation by a fixed time $(t_0)$ from the original signal $[f(t)]$,

(2) a second step of deducting the original shift signal $[f(t - t_0)]$ from said original signal $[f(t)]$ to prepare a subtraction pulse signal $[F(t) = f(t) - f(t - t_0)]$ comprising a positive and negative pulse component,

(3) a third step of preparing a positive pulse signal $F_+(t)$ by extracting only the positive component out of the positive and negative pulse components,

(4) a fourth step of preparing a positive shift signal $[F_+(t - t_0)]$ which is made by delaying the positive pulse signal $F_+(t)$ by a fixed time $(t_0)$,

(5) a fifth step of preparing a positive and negative addition pulse signals $[G(t) = F(t) + F_+(t - t_0)]$ by adding the positive shift signal $[F_+(t - t_0)]$ prepared in the fourth step to the subtraction pulse signal $[F(t)]$ prepared in the second step,

(6) a sixth step of preparing the positive addition signal $G_+(t)$ by extracting only the positive component out of the pulse components constituting the positive and negative addition pulse signals $G(t)$ to reproduce the pulse component of the original signal with the positive component, and

(7) a seventh step of detecting a soot signal by providing the positive addition signal $G_+(t)$ with a threshold value.

**Description**

BACKGROUND OF THE INVENTION

Field of the Invention

This invention relates to a novel apparatus for measuring PM (particulate matter, i.e., fine particles such as soot) contained in gases exhausted from an internal combustion engine such as a diesel engine, being capable of detecting particularly the signals of dry soot (hereinafter to be referred to simply as soot) of mainly carbon content, and a method for detecting soot signal in the PM measurement in exhaust gas.

Description of the Prior Art

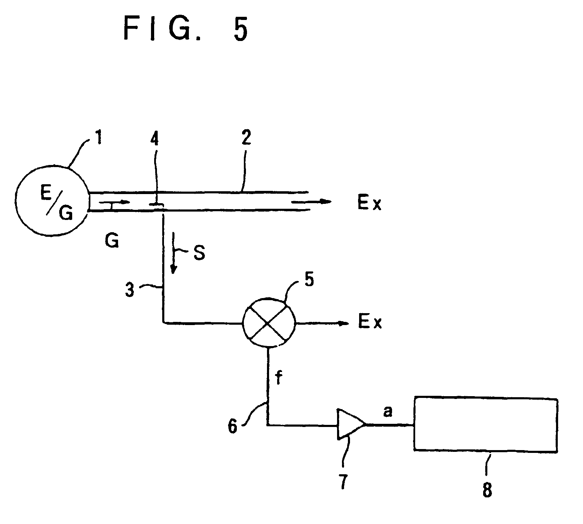

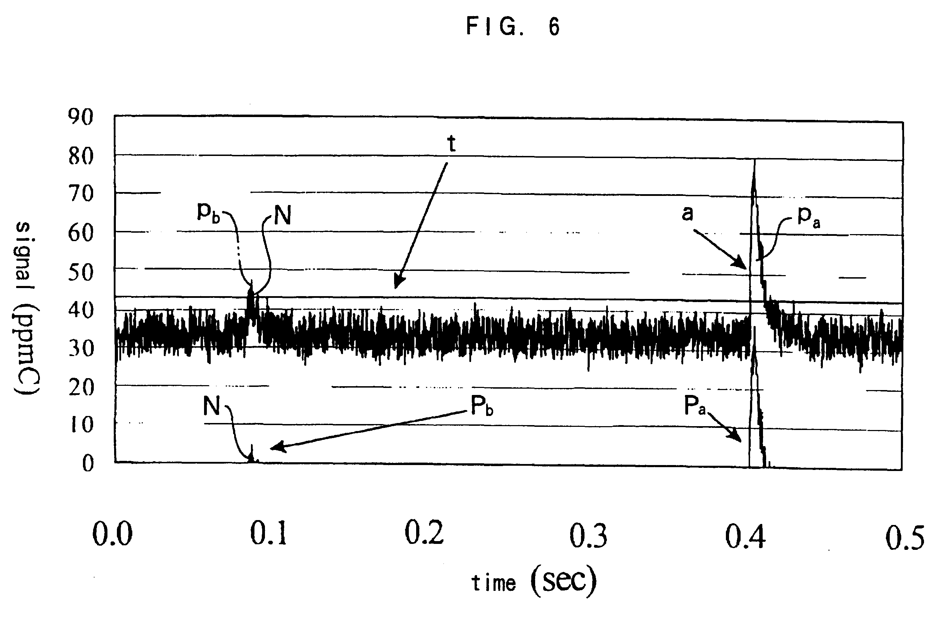

As shown in Fig. 5, the exhaust gas G from the diesel engine 1 which runs through the exhaust pipe 2 is partially taken into the sample gas channel 3 as a sample gas S through the probe 4. Said sample gas S is introduced into a flame ionization detector (hereinafter to be referred to as FID) 5, and a current output (FID signal) f proportional to THC (total hydrocarbon) and soot amount contained in the sample gas S is outputted to the signal line 6. The FID signal (analog signal) f is formed by superimposing a relatively low frequency pulse signal proportional to the amount of soot on the THC signal proportional to the amount of THC. This pulse signal comprises large and small signals proportional to the particle size of the soot. And, the FID signal f is appropriately amplified and shaped in corrugation by the preamplifier installed in the rear stage of FID 5 to become for example an original signal a as shown in the upper stage in Fig. 6, and under said condition it is inputted to the signal processing apparatus 8 using a personal computer (hereinafter to be referred to as PC).

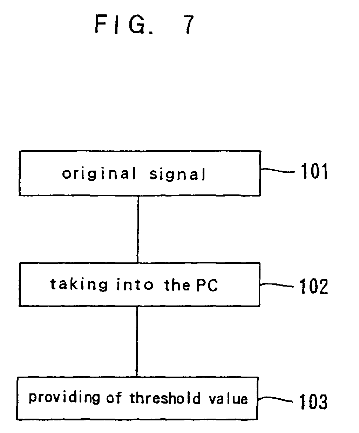

Conventionally, in detecting the amount of soot by using FID 5, the above original signal a from the FID 5 obtained in the step 101 in Fig. 7 is taken into the PC in the step 102 in Fig. 7, said original signal a is provided with a certain threshold value (ref. upper stage in Fig. 6), and have it recognize the pulse $p_a$ (ref. upper stage in Fig. 6) to extract the pulse signal $p_a$ (Step 103). The pulse signal $p_a$ extracted from the original signal a is shown in the lower stage in Fig. 6.

However, the original signal a has noise N in high frequency, and small pulse signal is buried in the noise N (ref. lower stage in Fig. 6) and is impossible to be extracted from the original signal a. The mark $P_b$ shows a small signal buried in the noise N.

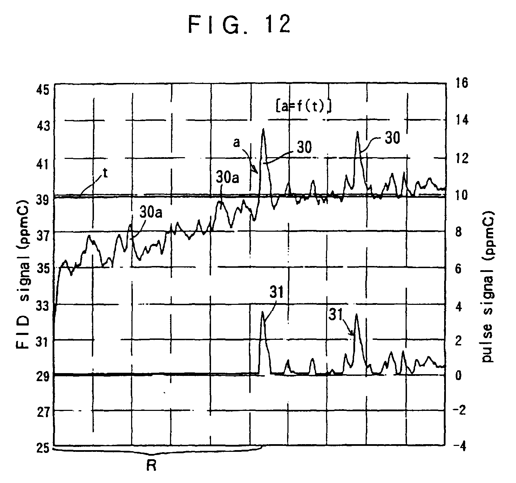

Further, as shown in the upper stage in Fig. 12, in case the base of the original signal a (hereinafter, f(t)) fluctuates, even if a certain threshold value t to have a pulse 30 ... recognize is set to extract the pulse signal 31 ... as shown in the lower stage of Fig. 12, no pulse 30a ... which should exist in the region R of base fluctuation is recognized to generate large error, because of which no accurate extraction of pulse signal 31 can be made, and as a result detection of the soot amount cannot be made in good precision.

SUMMARY OF THE INVENTION

This invention has been made on the basis of the situation described above. Its object is to provide a method and an apparatus for extracting a soot signal in high efficiency from an original signal obtained by a measurement of particulate matter of exhaust gas.

In order to attain the above object, the soot signal detection method in PM measurement in exhaust gas according to the first invention comprises sampling the gas exhausted from the internal combustion engine as a sample gas, introducing it in a frame ionization detector, taking the original signal outputted from the frame ionization detector through the preamplifier into a signal processing apparatus using a computer, and providing the signal taken in with a threshold value to extract the pulse-shaped soot signal, being characterized by taking said original signal into a low-pass filter having frequency characteristics which are approximately equal to the frequency characteristics of said preamplifier, and providing the signal filtered through the low-pass filter with a threshold value to extract said soot signal.

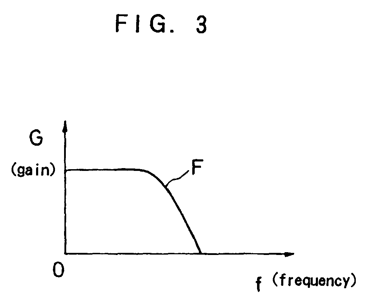

This invention has characteristics in the point of filtering the original signal with a low-pass filter having nearly equal frequency characteristics to the frequency characteristics of the preamplifier (ref. Fig. 3) before providing the original signal a outputted through the preamplifier with a threshold value. Accordingly, the filtered signal 10 shows reduction in noise only, for which a threshold value T (<t) to have the pulses 11, 12 recognize set at a level lower than before, and the pulse signal amount can be proportionally increased, and the small pulse signal 14 which had been buried in the noise N and impossible to extract can also be extracted in addition to a large pulse signal 13.

In short, as this invention is an operation method for providing a signal of FID containing a pulse in noise with a threshold value after passing through a low-pass filter to detect the pulse, it is possible to extract even the pulse signal buried in noise in good efficiency.

The third invention is to provide an apparatus for measuring PM in exhaust gas comprising sampling the gas exhausted from the internal combustion engine as a sample gas, introducing it in a frame ionization detector, providing the original signal outputted from the frame ionization detector at that time with a threshold value to extract the pulse-shaped soot signal, being characterized by preparing an original shift signal with retardation by a fixed time from the original signal, and making operation of deducting the original shift signal from said original signal to extract the pulse form signal which is a soot signal in good efficiency.

Also, this invention provides, from a separate viewpoint, a method for detecting a soot signal in PM measurement in exhaust gas (the second invention) which comprises sampling the gas exhausted from the internal combustion engine as a sample gas, introducing it in a frame ionization detector, providing the original signal outputted from the frame ionization detector at that time with a threshold value to extract the pulse-shaped soot signal, which includes:

(1) a first step of preparing an original shift signal [$f(t-t_0)$] with retardation by a fixed time ($t_0$) from the original signal [$f(t)$],

(2) a second step of deducting the original shift signal [$f(t - t_0)$] from said original signal [$f(t)$] to prepare a subtraction pulse signal [$F(t) = f(t) - f(t - t_0)$] comprising a positive and negative pulse component,

(3) a third step of preparing a positive pulse signal $F_+(t)$ by extracting only the positive component out of the positive and negative pulse components,

(4) a fourth step of preparing a positive shift signal [$F_+(t - t_0)$] which is made by delaying the positive pulse signal $F_+(t)$ by a fixed time ($t_0$),

(5) a fifth step of preparing a positive and negative addition pulse signals [$G(t) = F(t) + F_+(t - t_0)$] by adding the positive shift signal [$F_+(t - t_0)$] prepared in the fourth step to the subtraction pulse signal [$F(t)$] prepared in the second step,

(6) a sixth step of preparing the positive addition signal $G_+(t)$ by extracting only the positive component out of the pulse components constituting the positive and negative addition pulse signals $G(t)$ to reproduce the pulse component of the original signal with the positive component, and

(7) a seventh step of detecting a soot signal by providing the positive addition signal $G_+(t)$ with a threshold value.

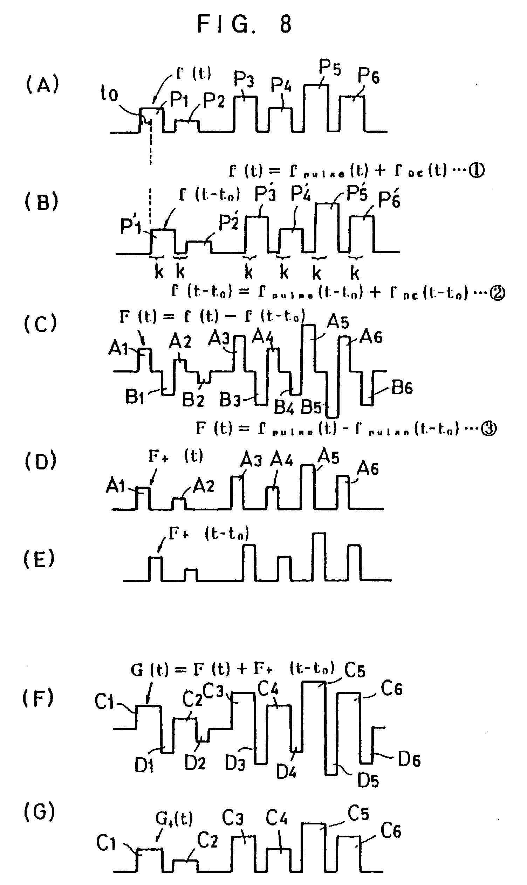

Hereinafter, the principle of the operation process employed in the second invention is explained by using Fig. 8. Although, as described above, there is shown on the upper stage in Fig. 12 the actual original signal $f(t)$ in the case where the base is fluctuated, this original signal $f(t)$ is simplified into the configuration as shown in Fig. 8(A) for illustrating the principle as above.

In Fig. 8(A), the original signal $f(t)$ in the case where the base is fluctuated is assumed to be:

$$f(t) = f_{pulse}(t) + f_{DC}(t) \ \ldots\ldots\ldots\ldots\ldots\ \textcircled{1}$$

where, $f_{pulse}(t)$ denotes the pulse components $P_1$ - $P_6$, and $f_{DC}(t)$ denotes a base signal. The pulse components $P_1$ - $P_6$ correspond to the pulse components 30, 30a ... shown in the upper stage in Fig. 12.

Next, a signal $f(t - t_0)$ with retardation of the original signal $f(t)$ by a fixed time $t_0$ is made [ref. Fig. 8(B)]. Namely, the relation becomes, from the above expression $\textcircled{1}$ :

$$f(t - t_0) = f_{pulse}(t - t_0) + f_{DC}(t - t_0) \ \ldots\ldots\ \textcircled{2}$$

where, $f_{pulse}(t - t_0)$ denotes the pulse components $P_1'$ - $P_6'$, and $f_{DC}(t - t_0)$ shows a base signal.

Accordingly, the present inventors noted that the base signal $f_{DC}(t)$ of the expression $\textcircled{1}$ is approximately equal to the base signal $f_{DC}(t - t_0)$ of the expression $\textcircled{2}$. It is because, when the above expression $\textcircled{2}$ is deducted from the expression $\textcircled{1}$, the signal $F(t)$ after removal of the base component is to be obtained. Namely, the signal $F(t)$ shown in Fig. 8(C) is to be constituted by the positive and negative pulse components $A_1$ - $A_6$ and $B_1$ - $B_6$ after deduction of the base portions. In this case,

$$F(t) = f_{pulse}(t) - f_{pulse}(t - t_0) \ \ldots\ldots\ldots\ \textcircled{3}$$

The third invention is a PM measuring apparatus using this principle.

And, in the second invention, in order to reproduce in good precision only the above pulse components $P_1$ - $P_6$ in the original signal f(t), the errors which occur when the pulse components $P_1$ - $P_6$ and the pulse components $P_1'$ - $P_6'$ overlap are corrected. Overlap of the pulse components $P_1$ - $P_6$ and the pulse components $P_1'$ - $P_6'$ is a cause for the error. It is necessary to lessen this error to prevent degradation of precision.

In Fig. 8(B), K shows a region in which the pulse components $P_1$ - $P_6$ and the pulse components $P_1'$ - $P_6'$ overlap. This correction operation is carried out by extracting only the positive pulse components $A_1$ - $A_6$ from the signal F(t) of Fig. 8(C), and adding the signal F(t) shown in the expression ③ to the signal $F_+$ (t - $t_0$) shown in Fig. 8(E) in which the resulting signal $F_+$ (t) [ref. Fig. 8(D)] is delayed by a certain time $t_0$.

The resulting signal G(t) [ref. Fig. 8(F)] becomes positive and negative pulse components $C_1$ - $C_6$ and $D_1$ - $D_6$, and there is carried out an operation to extract only the positive pulse components $C_1$ - $C_6$ from this signal G(t). It can be seen from Fig. 8(A) and Fig. 8(G) that the ultimate pulse components $C_1$ - $C_6$ of the resulting signal $G_+$ (t) reproduce only the above pulse components $P_1$ - $P_6$ of the original signal f(t) in good precision.

Furthermore, this invention provides, from another viewpoint, the following method (second invention) for carrying out in compact manner extraction of a pulse component.

A method for detecting a soot signal in PM measurement in exhaust gas which comprises sampling the gas exhausted from the internal combustion engine as a sample gas, introducing it in a frame ionization detector, providing the original signal outputted from the frame ionization detector at that time with a threshold value to extract the pulse-shaped soot signal, which includes:

(1) a first step of preparing an original shift signal [f(t - $t_0$)] with retardation by a fixed time ($t_0$) from the original signal [f(t)],
(2) a second step of deducting the original shift signal [f(t - $t_0$)] from said original signal [f(t)] to prepare a subtraction pulse signal [ F(t) = f(t) - f(t - $t_0$) ] comprising a positive and negative pulse component,
(3) a third step of preparing a positive pulse signal $F_+$ (t) by extracting only the positive component out of the positive and negative pulse components, and
(4) a fourth step of detecting a soot signal by providing the positive pulse signal $F_+$ (t) with a threshold value.

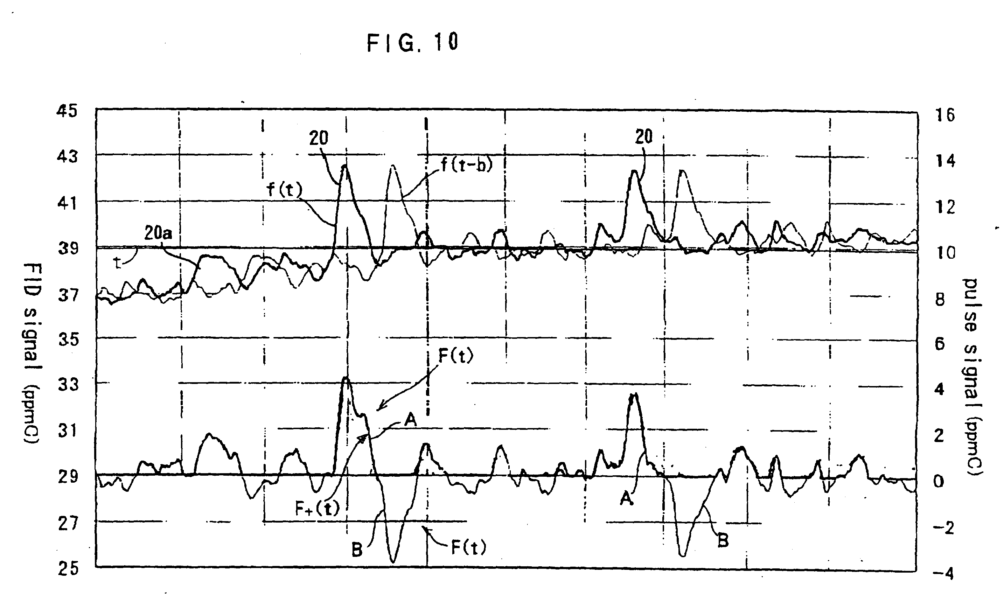

In this method (ref. Fig. 10), the signal $F_+$ (t) shown in Fig. 8(D) is obtained by the same operation method as described on pages 4 and 5.

Thereafter, in the method of the second invention as described on pages 4 and 5, an operation for correcting the errors that occur in the case of the overlap of the pulse components $P_1$ - $P_6$ and $P_1'$ - $P_6'$ is performed, but in the method of the second invention as described on page 6, no such correction operation is required. That is to say, in this method, by applying the threshold value previously set to the positive pulse components $A_1$ - $A_6$ of the signal $F_+$ (t), extraction of the positive pulse components $A_1$ - $A_6$ is carried out in simple manner. Accordingly, this method is effective for the operation in the case of non-existence or less existence of the overlap region K, and has an advantage over the method as described on pages 4 and 5 in requiring a shorter operation time.

BRIEF DESCRIPTION OF THE DRAWINGS

Fig. 1 is a flow chart for illustrating an embodiment of the first invention;
Fig. 2 is a view for illustrating the operation for extracting the soot signal from the signal filtered through a low-pass filter in the above embodiment;
Fig. 3 is a frequency characteristic diagram of a preamplifier used in the above embodiment;
Fig. 4 is a constitution illustrative view showing another embodiment of the first invention;
Fig. 5 is a constitution illustrative view showing a PM measuring apparatus relating to the first invention and the third invention;
Fig. 6 is a view for illustrating the conventional soot signal extraction operation;
Fig. 7 is a flow chart for illustrating the conventional embodiment;
Fig. 8 is a view for illustrating the principle of the second invention and the principle applied in the third invention;
Fig. 9 is a view for illustrating the second invention;
Fig. 10 is a view for illustrating the second invention;
Fig. 11 is a flow chart for illustrating the second invention; and
Fig. 12 is a view for illustrating the conventional embodiment.

DESCRIPTION OF THE PREFERRED EMBODIMENTS

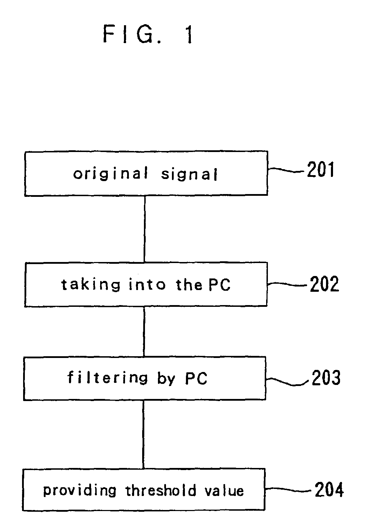

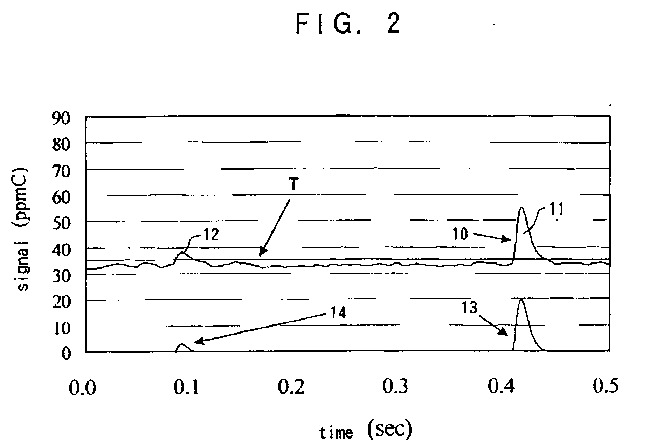

Hereinafter, a preferred embodiment of this invention is illustrated with reference to the accompanying drawings. Fig. 1 shows an embodiment of this invention which is designed to carry out filtering by means of a computer software. In this embodiment, in order to apply a low-pass filter to the original signal a, its filtering is made by a PC (personal computer). The upper stage in Fig. 2 shows a signal 10 obtained by the filtering of the original signal a, and the lower stage in Fig. 2 shows the pulse signals 13, 14 extracted from this filtered signal 10. Also, the mark F in Fig. 3 shows a frequency characteristic of the preamplifier 7. Further, Fig. 5 schematically shows an example of the PM measuring apparatus to be used for this invention. Since the operations up to the stage of obtaining the original signal (analog signal) are similar to those of the conventional embodiments, the explanation is omitted.

At first, in Figs. 1 - 3, 5, and 6, an original signal a having high frequency noise N and relative low frequency pulse signals $p_a$, $p_b$ is multiplied by a low-pass filter having frequency characteristic nearly equal to those of preamplifier 7.

That is to say, in detecting the amount of soot by using FID 5, the original signal a from the FID 5 obtained in the step 201 of Fig. 1 is taken into the PC by the step 202 in Fig. 1, and to its signal a a low-pass filter having the frequency characteristic F is led (ref. Step 203). According to this embodiment, filtering is carried out by computer software. That is to say, the above filtering operation is carried out by PC. By this step, there is obtained a filtered signal 10. In this signal 10, as apparent in comparison with the original signal a, only the noise is reduced.

Next, in the step 204, a threshold value T (ref. upper stage in Fig. 2) is provided in the signal 10 to have the pulses 11, 12 recognize. In this case, since the noise only is reduced in the above signal 10, the above threshold value T which causes to recognize the pulses 11, 12 lower than the threshold value t which is applied to the original signal a. Accordingly, it is possible to increase the pulse signal amount.

The parts 13, 14 are the pulse signals extracted from the filtered signal 10. It is possible to extract even the small pulse signal 14 ($P_b$) which had been impossible to detect hidden by the noise N.

In this manner, in comparison with the conventional process of extracting the pulse signal $P_a$ from the original signal a of the real data, this invention of extracting the pulse signals 13, 14 after filtering the actual data can extract the pulse signals 13, 14 in the high efficiency.

Accordingly, THC signals on which the pulse signals are superimposed are obtainable in good precision.

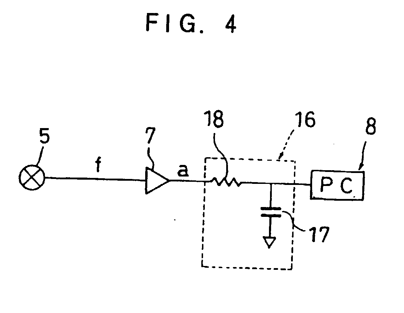

In the above embodiment, an example of filtering carried out by PC has been shown, but as shown in Fig. 4, it may be so practiced to provide a low-pass filter 16 comprising an electric circuit on the rear stage of the preamplifier as shown in Fig. 4, and lead an original signal a to the low-pass filter 16 to elevate the extraction efficiency of the pulse signal. This low-pass filter 16 also has the frequency characteristics which are approximately equal to the frequency characteristics F of the preamplifier 7. In Fig. 4, the low-pass filter 16 is constituted by a capacitor 17 and a resistor 18.

Next, using Fig. 10, one method of the second invention is described.

The upper stage of Fig. 10 shows an original signal f(t) in the case where the base is fluctuated and the signal f(t - b) with delay of this original signal f(t) by a certain time b. This original signal f(t), though different more or less in configuration, it corresponds to the original signal f(t) shown in the upper stage of Fig. 12.

The lower stage of Fig. 10 shows a signal F(t) constituted by the positive and negative pulse components A... and B... after deduction of the base portion and a signal $F_+$(t) obtained by extracting the positive pulse component A... only from the signal F(t). Also, Fig. 5 schematically shows an example of the PM measuring apparatus to be used (third invention). Since the motion up to the stage of obtaining the original signal (analog signal) f(t) is same as that of the conventional one, explanation thereof is omitted.

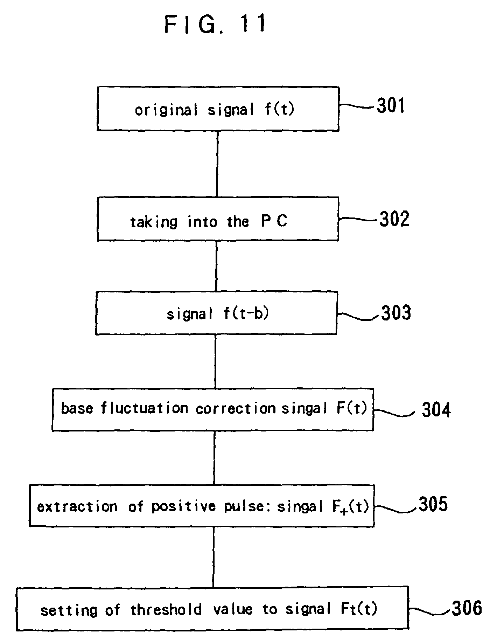

In detecting the amount of soot by using FID5, the original signal f(t) from FID5 obtained in the step 301 in Fig. 11 (ref. Fig. 8(A)) is taken into the PC in the step 302. The following steps are the operations on PC. At first, there is prepared a signal f(t - b) made by delaying the original signal f(t) by a certain time b, as shown in the step 303 (ref. Fig. 8(b)). Next, a signal f(t - b) is deducted from the original signal f(t) for correction of the base fluctuation (ref. step 304). The signal F(t) obtained by it (ref. Fig. 8(C)) is to be constituted by the positive and negative pulse components A..., B... after deducting the base portion. Continuously, in the step 305, only the positive pulse components A... are extracted (Fig. 8(D)). Continuously, to the positive pulse components A..., a preset threshold value is applied to carry out extraction of the positive pulse components A... in compact manner (ref. Step 306).

As described above, conventionally, for example, as shown in Fig. 10, in case of the fluctuation of the base of the original signal f(t), a certain threshold value t to have the pulse 20 recognize is set to extract the pulse signal, and the pulses 20a... are not recognized and large error occurred. Against it, in said method of the second invention, the above simplified operation is employed to carry out the correction of base fluctuation, after which only the positive pulse components A... are extracted, and to these pulse components A... threshold value is to be applied. Therefore, even in case of fluctuation of the base, soot signal can be simply detected.

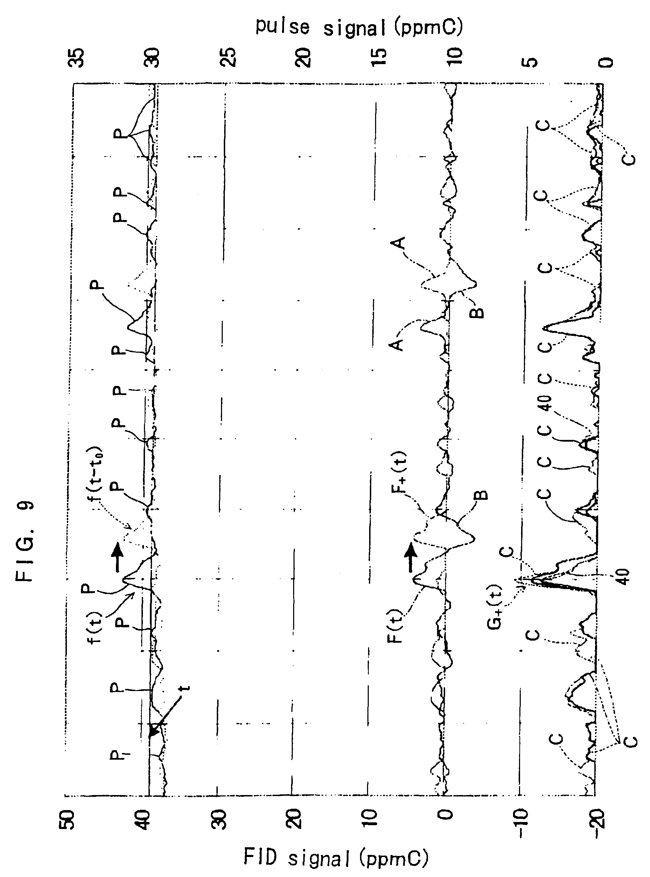

Next, using Figs. 8 and 10 and Fig. 9, another method of the second invention is explained. In Fig. 9, the parts bearing the same marks as those used in Figs. 8 and 10 are the same or the corresponding ones.

In Figs. 8 to 10, the operations up to those shown in Fig. 8(D) are same as those of the method described above, and the explanation is omitted.

The operation for correction is performed by the procedures of extracting only the positive pulse components $A_1$ - $A_6$ (A) from the signal F(t) to obtain signal $F_+$ (t) and adding a signal F(t) shown in the above expression ③ to the signal $F_+$ (t - $t_0$) shown in Fig. 8(E) which is obtained by delaying the signal $F_+$ (t) by a certain time $t_0$.

The resulting signal G(t) becomes the positive and negative pulse components $C_1$ - $C_6$ (C) and $D_1$ - $D_6$. In this case, there is carried out an operation of extracting only the positive pulse components $C_1$ - $C_6$ (C) from the signal G(t). The pulse components $C_1$ - $C_6$ (C) of the resulting signal $G_+$ represent only the above pulse components $P_1$ - $P_6$ (P) of the original signal f(t) in good precision.

As reviewed above, in the second and the third invention, by making the signals with displacement of a certain time from the original signal including the pulse, and deducting them from the original pulse signal, there is prepared a base fluctuation correction signal F(t) with cancellation of the fluctuation of the base signal, thereby making it possible to reproduce the pulse signal only. And, by using said pulse signal, pulse signal can be extracted.

Especially, in one method of the second invention, there is effected a correction in the case of the superimposing of the pulse components $P_1$ - $P_6$ and the pulse components $P_1'$ - $P_6'$. Accordingly, the errors caused by the superimposition are reduced to extract only the pulse signals which are the soot signals more efficiently, and further THC signals in good efficiency.

As described above, in the first invention, by applying a low-pass filter having the frequency characteristics which are nearly equal to the frequency characteristics of the preamplifier to the original signal by utilizing that the frequency of noise is higher than the frequency of pulse, only the noise can be reduced. Consequently, the threshold value for recognizing pulse can be reduced to make it possible to detect only the pulse signal which is soot signal, and also to detect the THC signal in good efficiency.

In the second and the third invention, by making the signals with displacement of a certain time from the original signal including the pulse, and deducting them from the original signal, fluctuation of the base signal can be cancelled, thereby making it possible to reproduce the pulse signal only. Therefore, even in case of the fluctuation in the base signal, pulse signal and THC signal which are soot signals can be detected in good efficiency.

Especially, in one method of the second invention, there is effected correction of errors in the case of the superimposing of the pulse components of the original signal and the pulse components of the signal made by delaying the original signal by a certain time. Accordingly, the errors attributed to the superimposition are lessened to extract only the pulse signals which are the soot signals more efficiently, and further THC signals in high efficiency.

**Claims**

1. A method of extracting a soot signal from an original signal obtained by a measurement of particulate matter of exhaust gas, comprising the following steps:

   - taking a sample of the gas exhausted by an internal combustion engine and introducing said sample into a frame ionization detector,
   - amplifying the original signal which is the output signal of the frame ionization detector with a preamplifier,
   - using a resulting amplified signal as an input signal of a signal processing apparatus, which
   - extracts a pulse-shaped soot signal from the amplified signal by filtering the amplified signal with a low-pass filter having frequency characteristics which are approximately equal to frequency characteristics of said preamplifier and by processing a resulting filtered signal using a threshold value.

2. A method as claimed in claim 1, **characterized in that** said filtering is carried out by a software program.

3. A method as claimed in claim 1, **characterized in that** said filtering is carried out by an electronic circuit comprising a specified capacitor and a resistor, said electronic circuit having frequency characteristics which are approximately equal to frequency characteristics of said preamplifier.

4. A method of extracting a soot signal from an original signal obtained by a measurement of particulate matter of exhaust gas, comprising the following steps:

   - taking a sample of the gas exhausted by an internal combustion engine and introducing said sample into a frame ionization detector,
   - using the original signal which is the output signal of the frame ionization detector as an input signal of a signal processing apparatus, which extracts a pulse-shaped soot signal from the original signal by the following steps:

(1) preparing a shift signal $f(t-t_0)$ which is the original signal $f(t)$ delayed by fixed time $t_0$,

(2) deducting the shift signal $f(t-t_0)$ from the original signal $f(t)$ to prepare a subtraction pulse signal $F(t)=f(t)-f(t-t_0)$ comprising positive and negative pulse components,

(3) preparing a positive pulse signal $F_+(t)$ by extracting only the positive components out of the positive and negative pulse components of the subtraction pulse signal $F(t)$,

(4) extracting the soot signal by processing the positive pulse signal $F_+(t)$ using a threshold value.

**5.** A method as claimed in claim 4, **characterized in that** step (4) is replaced by the following steps:

(5) preparing a positive shift signal $F_+(t-t_0)$ which is the positive pulse signal $F_+(t)$ delayed by a fixed time $t_0$.

(6) preparing an addition signal $G(t)=F(t) + F_+(t-t_0)$ by adding the positive shift signal $F_+(t-t_0)$ prepared in step (5) to the subtraction pulse signal $F(t)$ prepared in step (2),

(7) preparing a positive addition signal $G_+(t)$ by extracting the positive components out of the positive and negative pulse components of addition signal $G(t)$, and

(8) extracting the soot signal from the positive addition signal $G_+(t)$ by using a threshold value.

**6.** An apparatus for measuring particulate matter, particularly particles such as soot contained in an exhaust gas, comprising: an exhaust pipe through which the exhaust gas runs, a probe being connected to said exhaust pipe for taking a sample of the exhaust gas and piping said sample over a sample gas channel into a frame ionization detector, which has a signal output channel, a signal processing unit being connected to said signal output channel via a signal line, the signal processing unit containing a computer which processes an original signal as an input signal according to claims 4 and 5.

# F I G. 1

| original signal | —201 |
|:---:|:---|

| taking into the PC | —202 |
|:---:|:---|

| filtering by PC | 203 |
|:---:|:---|

| providing threshold value | —204 |
|:---:|:---|

# FIG. 2

# F I G. 3

# FIG. 4

# F I G. 5

FIG. 6

EP 1 063 516 A2

FIG. 7

| | |
|---|---|
| original signal | —101 |

| | |
|---|---|
| taking into the PC | —102 |

| | |
|---|---|
| providing of threshold value | —103 |

# FIG. 8

(A)

(B)

$$f(t) = f_{pulse}(t) + f_{DC}(t) \cdots ①$$

$$f(t-t_0) = f_{pulse}(t-t_0) + f_{DC}(t-t_0) \cdots ②$$

(C)

$$F(t) = f_{pulse}(t) - f_{pulse}(t-t_0) \cdots ③$$

(D)

(E)

(F)

(G)

FIG. 9

F I G. 10

# F I G. 1 1

| original signal f(t) | —301 |

| taking into the P C | —302 |

| signal f(t-b) | 303 |

| base fluctuation correction singal F(t) | 304 |

| extraction of positive pulse: singal F₊(t) | 305 |

| setting of threshold value to signal Ft(t) | 306 |

FIG. 12